# EUROPÄISCHE PATENTSCHRIFT

(11) **EP 1 201 511 B1**
(45) Veröffentlichungstag und Bekanntmachung des Hinweises auf die Patenterteilung: **01.10.2003**
(21) Anmeldenummer: 00123104.2
(22) Anmeldetag: 25.10.2000
(51) Int. Cl.: B60R 22/02, B60R 22/26

(54) **Kraftumlenkungsvorrichtung für die Anpassung eines Beckengurtes**
Force deflection device for adaption of a lap belt
Dispositif de déflexion de forces pour l'adaption d' une ceinture au niveau du bassin

(43) Veröffentlichungstag der Anmeldung: 02.05.2002
(73) Patentinhaber: Ford Global Technologies, Inc., Dearborn, Michigan 48136 (US)
(72) Erfinder: Hermann, Michael, 50769 Köln (DE)
(74) Vertreter: Bonsmann, Manfred, Dipl.-Ing.

(56) Entgegenhaltungen:
- EP-A- 0 675 028
- US-A- 3 385 633
- US-A- 4 093 307
- US-A- 5 257 854
- US-A- 5 624 136

## Beschreibung

Die Erfindung betrifft eine Kraftumlenkungsvorrichtung für die Anpassung eines Beckengurtes zur Benutzung durch Schwangere und übergewichtige Personen, enthaltend einen Kraftumlenkungsgurt mit einem ersten, am Beckengurt zu befestigenden Ende und mit einem zweiten Ende, welches durch die Fuge zwischen Sitzkissen und Sitzrückenlehne zu führen und am Sitz zu befestigen ist.

Herkömmliche Sicherheitsgurte in Flugzeugen, Kraftfahrzeugen oder dergleichen enthalten einen Beckengurt, welcher vor dem Becken beziehungsweise Bauch des Benutzers her von einer Seite des Sitzes zur anderen verläuft. Im Falle einer auftretenden hohen Bremsbeschleunigung, etwa bei einem Auffahrunfall, hält der Beckengurt die gesicherte Person im Sitz zurück, wobei er die Rückhaltekraft vornehmlich auf die Bekken- beziehungsweise Bauchpartien des Benutzers ausübt. Diese Art der Kraftausübung kann in bestimmten Situationen ungünstig sein.

Aus der US 5 624 136 ist eine Kraftumlenkungsvorrichtung bekannt, bei der eine Anpassung des Verlaufes und der Krafteinleitung eines herkömmlichen Beckengurtes derart angestrebt wird, dass die Rückhaltekräfte des Gurtsystems vom Bauch des Benutzers weg gelenkt und verstärkt auf die Oberschenkel gerichtet werden. Ein derartiges System ist daher insbesondere für die Benutzung durch Schwangere geeignet. Die Kraftumlenkungsvorrichtung besteht aus einem Kraftumlenkungsgurt, dessen erstes Ende über einen Schnappverschluss am Beckengurt befestigt ist, und dessen zweites Ende mit Hilfe eines Klettverschlusses unterhalb des Sitzkissens an einem festen Rahmenteil oder an Sitzfedern zu fixieren ist. Diese Fixierung des zweiten Endes ist sehr umständlich. Sofern die Unterseite des Sitzkissens keine geeigneten Befestigungspunkte aufweist, kann es sein, dass die gewählte Befestigung des Kraftumlenkungsgurtes entweder keine ausreichende Festigkeit im Falle eines Einsatzes des Gurtes bietet oder dass die Unterkonstruktion des Sitzkissens beschädigt wird. Ein weiterer Nachteil der genannten Befestigungsart besteht darin, dass der Kraftumlenkungsgurt im unbenutzten Zustand dazu tendiert, auf den Boden zu fallen, von wo er beim Anlegen des Gurtes wieder aufgehoben werden muss. Dies ist jedoch gerade für die Benutzer-Zielgruppen der Vorrichtung oft nicht nur lästig, sondern kaum durchführbar.

Aus der EP 0 675 028 B1 ist ein Sicherheitsgurtsystem nach dem oberbegriff des Anspruchs 1 bekannt, welches ebenfalls speziell auf eine Benutzung durch Schwangere abgestimmt ist. Der in diesem System vorgesehene Beckengurt wird über einen daran befestigten Kraftumlenkungsgurt vom Bauch weg und zwischen die Oberschenkel gezogen, wobei der Kraftumlenkungsgurt mit seinem zweiten Ende durch die Fuge zwischen Sitzkissen und Sitzrückenlehne geführt ist. Auf der Rückseite des Sitzes ist das zweite Ende des Kraftumlenkungsgurtes an einem quer verlaufenden Gurtsystem befestigt, wobei die beiden Enden dieses Gurtsystems an der linken beziehungsweise rechten Seite des Sitzes verschraubt sind. Nachteilig bei dieser Lösung ist, dass eine vollständige Neuinstallation des Gurtsystems erforderlich ist, wobei der Standardgurt unbenutzt bleibt und z.B. unter einem zusätzlichen Sitzbezug zu verbergen ist. Ferner ist die Befestigung des Kraftumlenkungsgurtes an zwei Punkten seitlich des Sitzes sehr umständlich und mit dem Lösen beziehungsweise erneuten Befestigen von Verschraubungen verbunden. Für viele Benutzer wird die Anbringung eines solchen Gurtsystems daher die Inanspruchnahme einer Werkstatt erforderlich machen, was mit entsprechenden Kosten verbunden ist und die - unter Sicherheitsaspekten wünschenswerte - Bereitschaft zum Verwenden des Gurtes vermindern dürfte.

Vor diesem Hintergrund besteht die Aufgabe der vorliegenden Erfindung darin, eine Kraftumlenkungsvorrichtung der eingangs genannten Art derart zu verbessern, dass sie einfacher anzuwenden und kostengünstiger herzustellen ist.

Diese Aufgabe wird durch eine Kraftumlenkungsvorrichtung mit den Merkmalen des Anspruchs 1 gelöst. Vorteilhafte Ausgestaltungen sind in den Unteransprüchen enthalten.

Die Kraftumlenkungsvorrichtung dient der Anpassung des Verlaufes und der Krafteinleitung des Beckengurtes eines Sicherheitsgurtsystems für die Benutzung insbesondere durch Schwangere und übergewichtige Personen, wobei das Sicherheitsgurtsystem vorzugsweise in einem Kraftfahrzeug oder Flugzeug installiert sein kann. Die Kraftumlenkungsvorrichtung enthält einen Kraftumlenkungsgurt mit einem ersten Ende, das am anzupassenden Beckengurt zu befestigen ist, sowie mit einem zweiten Ende, das durch die Fuge zwischen dem Sitzkissen und der Sitzrückenlehne des Sitzes hindurch zu führen und am Sitz zu befestigen ist. Am zweiten Ende des Kraftumlenkungsgurtes ist ein plattenförmiges Fixierelement befestigt, wobei dieses Fixierelement so ausgestaltet ist, dass es zumindest in einer Ausrichtung relativ zum Sitz keinen Durchtritt durch die Fuge zwischen Sitzkissen und Sitzrückenlehne erlaubt, und auf diese weise die Befertigung des zweiter Endes der Kraftumlenkungsgurtes am sitz erfolgt.

Durch die erfindungsgemäße Anordnung des Fixierelementes am zweiten Ende des Kraftumlenkungsgurtes wird eine besonders einfach anwendbare und zugleich kostengünstig herstellbare Fixierung des Kraftumlenkungsgurts am Sitz erreicht. Diese Fixierung erfolgt dadurch, dass der Kraftumlenkungsgurt durch die Fuge zwischen Sitzkissen und Sitzrückenlehne hindurch zur Vorderseite des Sitzes geführt wird, während sein am Fixierelement befestigtes Ende auf der Rückseite des Sitzes verbleibt. Dort befindet sich das Fixierelement in derjenigen Ausrichtung relativ zum Sitz, in welcher es nicht durch die Fuge hindurchtreten kann.

Für die Herstellung der erfindungsgemäßen Fixierung des Kraftumlenkungsgurts sind keine besonderen Voraussetzungen der Ausgestaltung des Sitzes vorhanden, insbesondere müssen keine Rahmenkonstruktionen für das Befestigen des Kraftumlenkungsgurtes vorhanden und zugänglich sein, und es müssen auch keine Verschraubungen gelöst und zur Fixierung des zusätzlichen Gurtes verwendet werden. Die kostengünstige Herstellung und besonders einfache Montage der Kraftumlenkungsvorrichtung kommt einer - unter Sicherheitsaspekten wünschenswerten - weiten Verbreitung seiner Anwendung entgegen.

Das Fixierelement ist plattenförmig, wobei das zweite Ende des Kraftumlenkungsgurtes etwa im Flächenzentrum dieser Platte befestigt ist. Eine derartige Fixierplatte stellt sich unter Zugbelastung am Kraftumlenkungsgurt von selbst quer zum Gurt und legt sich dadurch mit voller Fläche an die Rückseite des Sitzes an. In dieser Ausrichtung steht die Fixierplatte quer zur Fuge zwischen Sitzkissen und Sitzrückenlehne, so dass sie durch die Fuge nicht durchtreten kann. Gleichzeitig hat das plattenförmige Fixierelement den Vorteil, dass es bei Bedarf auch mit seiner Stirnseite voran durch die Fuge zwischen Sitzkissen und Sitzrückenlehne geschoben werden kann, was die Montage beziehungsweise Demontage der Kraftumlenkungsvorrichtung erleichtert.

Das Fixierelement weist vorzugsweise mindestens ein lösbares Befestigungsmittel auf, mit dem das Fixierelement am Sitz, insbesondere an der Rückseite der Sitzrückenlehne, befestigt werden kann. Im benutzten Zustand ist das Fixierelement aufgrund der Zugbelastung am Kraftumlenkungsgurt in seiner Position festgelegt. Durch das Befestigungsmittel wird diese Festlegung der Position des Fixierelementes an seinem Ort auch dann beibehalten, wenn der Sicherheitsgurt nicht benutzt wird und daher keine Zugbelastung am Kraftumlenkungsgurt herrscht. Da das Befestigungsmittel lediglich das Fixierelement an seinem Ort halten muss, muss es nur für geringe Kraftbelastungen ausgelegt sein. Insbesondere kann das Befestigungsmittel durch einen Klettverschluss gebildet werden, wobei die Hakenseite eines solchen Klettverschlusses häufig ohne besondere Maßnahmen in Textilgewebe eines Sitzes verhakt werden kann.

Für die Ausgestaltung des ersten Endes des Kraftumlenkungsgurtes, welches am Beckengurt zu befestigen ist, stehen verschiedene Möglichkeiten zur Verfügung. Vorzugsweise ist an diesem Ende ein Haken sowie mindestens eine Öse angeordnet, wobei die Öse unter Bildung einer Schlaufe des Kraftumlenkungsgurts, die um den Beckengurt geführt ist, im Haken eingehängt werden kann. Der Kraftumlenkungsgurt kann auf diese Weise besonders einfach an dem Beckengurt befestigt werden, nachdem das herkömmliche Sicherheitsgurtsystem angelegt worden ist.

Im Folgenden wird die Erfindung mit Hilfe der Figuren beispielhaft erläutert. Es zeigen:
- Fig. 1: den Sitz eines Kraftfahrzeuges mit einem Sicherheitsgurtsystem und der erfindungsgemäßen Kraftumlenkungsvorrichtung;
- Fig. 2: eine perspektivische Ansicht der Kraftumlenkungsvorrichtung.

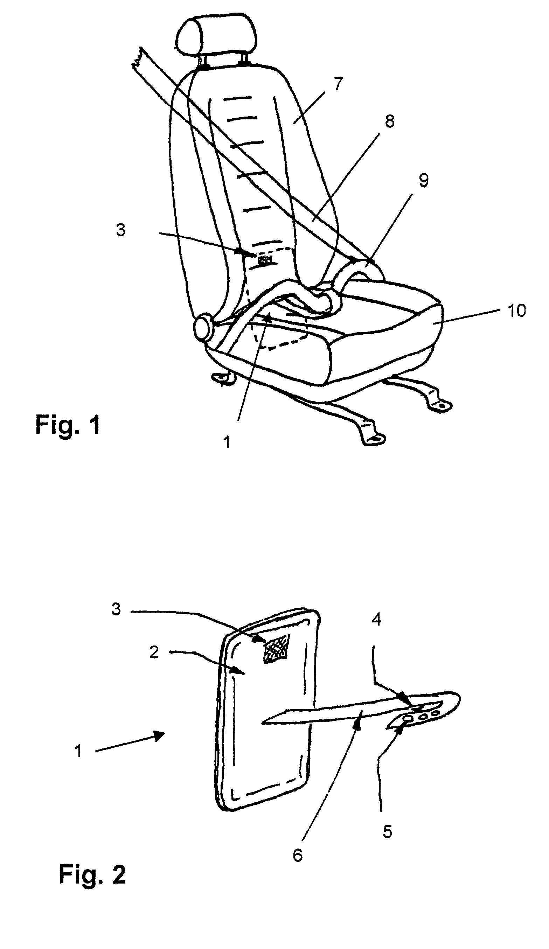

In Figur 1 ist ein Kraftfahrzeugsitz bestehend aus einer Sitzrückenlehne 7 und einem Sitzkissen 10 dargestellt. Weiterhin ist der Verlauf des Brustgurtes 8 und des Beckengurtes 9 eines herkömmlichen (Dreipunkte-) Sicherheitsgurtes dargestellt, wobei auf die Darstellung der an sich bekannten Einzelheiten der Befestigung und Längenverstellung eines solchen Gurtsystems verzichtet wurde.

Bei dem in Figur 1 dargestellten Verlauf des Beckengurtes 9 ist die Wirkung einer erfindungsgemäßen Kraftumlenkungsvorrichtung 1 gezeigt. Diese Wirkung besteht darin, dass der mittlere Teil des Beckengurtes 9, welcher im benutzten Zustand zwischen den Oberschenkeln einer im Sitz befindlichen Person (nicht dargestellt) liegt, nach unten beziehungsweise hinten gezogen wird. Der Beckengurt 9 wird daher vom Bauch der Person weg gezogen, und die Krafteinleitung über den Beckengurt 9 erfolgt ähnlich wie bei einem Fallschirmspringergurt primär auf die Oberschenkel.

In Figur 2 ist die erfindungsgemäße Kraftumlenkungsvorrichtung 1 perspektivisch separat dargestellt. Die Vorrichtung besteht aus einem Kraftumlenkungsgurt 6, dessen erstes (in Figur 2 rechtes) Ende an dem Beckengurt 9 (Fig. 1) zu befestigen ist. In dem Beispiel sind zur Befestigung dieses Endes am Beckengurt 9 ein Haken 4 sowie zwischen dem Haken 4 und dem Ende des Kraftumlenkungsgurtes 6 angeordnete Ösen 5 vorgesehen. Dieses Ende des Kraftumlenkungsgurtes kann somit in einer Schlaufe um den Beckengurt 9 herum gelegt werden, wobei die Ösen in einer durch die Auswahl der Öse 5 anpassbaren Länge der Schlaufe in den Haken 4 eingehängt wird. Der Kraftumlenkungsgurt 6 kann so in einfacher Weise nach dem Anlegen des Standardgurtes am Beckengurt 9 befestigt und in seiner Länge angepasst werden, um die gewünschte Verlaufskorrektur dieses Beckengurtes zu erzielen.

Am ersten (in Figur 2 linken) Endes des Kraftumlenkungsgurtes 6 ist ein Fixierelement in Form einer Fixier- oder Halteplatte 2 befestigt. Das zweite Ende des Kraftumlenkungsgurtes 6 ist etwa im Mittelpunkt dieser Platte angebracht, zum Beispiel indem es an einem Steg (nicht dargestellt) verknotet ist. Wie aus Figur erkennbar ist, stellt sich die Fixierplatte 2 auf der Rückseite des Sitzes vor der Fuge zwischen Sitzrückenlehne 7 und Sitzkissen 10 quer, so dass sie das zweite Ende des Kraftumlenkungsgurtes 6 auf der Rückseite des Sitzes festhält. Durch eine entsprechende Dimensionierung des Fixierelementes 2 kann gewährleistet werden, dass sich die über den Kraftumlenkungsgurt 6 auf das Fixierelement übertragene Zugkraft über eine große Fläche verteilt und daher problemlos von der Rückseite des Sitzes aufgenommen werden kann.

Die Fixierplatte 2 weist an ihrer oberen, der Rückseite der Sitzrückenlehne 7 zugewandten Seite einen Klettverschluss 3 auf, mit dessen Hilfe die Fixierplatte am Sitz angeheftet werden kann. Da über diesen Klettverschluss 3 nicht die eigentliche Kraftaufnahme bei der Kraftumleitung aus dem Bekkengurt 9 stattfindet, sondern es vielmehr nur darum geht, die Fixierplatte 2 in ihrer Position zu halten, ist die Befestigung an einem Punkt mit Hilfe eines Klettverschlusses ausreichend. Sie verhindert, dass die Fixierplatte 2 im nicht benutzten Zustand, in dem keine Zugbelastung auf dem Kraftumlenkungsgurt 6 anliegt, ihre Position verlässt und störend im Fußraum hinter dem Sitz hängt oder liegt.

## Patentansprüche

1. Kraftumlenkungsvorrichtung (1) für die Anpassung eines Beckengurtes (9) zur Benutzung durch Schwangere und Übergewichtige, enthaltend einen Kraftumlenkungsgurt (6) mit einem ersten, am Beckengurt zu befestigenden Ende, und einem zweiten Ende, welches durch die Fuge zwischen Sitzkissen (10) und Sitzrückenlehne (7) zu führen und am Sitz zu befestigen ist, wobei am zweiten Ende des Kraftumlenkungsgurtes (6) ein Fixierelement (2) befestigt ist,
das zumindest in einer Ausrichtung relativ zum Sitz nicht durch die Fuge zwischen Sitzkissen (10) und Sitzrükkenlehne (7) durchtreten kann, **dadurch gekennzeichnet, dass** das Fixierelement (2) plattenförmig ist, und dass das zweite Ende des Kraftumlenkungsgurtes (6) etwa im Zentrum des Fixierelementes befestigt ist.

2. Kraftumlenkungsvorrichtung nach Anspruch 1,
**dadurch gekennzeichnet, dass** das Fixierelement (2) lösbare Befestigungsmittel, vorzugsweise in Form eines Klettverschlusses (3), zur Befestigung am Sitz an der Rückseite der Sitzrückenlehne (7) aufweist.

3. Kraftumlenkungsvorrichtung nach einem der Ansprüche 1 oder 2,
**dadurch gekennzeichnet, dass** das erste Ende des Kraftumlenkungsgurtes (6) einen Haken (4) sowie mindestens eine Öse (5) aufweist, so dass der Kraftumlenkungsgurt (6) unter Bildung einer Schlaufe um den Beckengurt (9) gelegt und die Öse in Haken eingehängt werden kann.

## Claims

1. Force deflection device (1) for adaptation of a lap belt (9) for use by pregnant women and the overweight which contains a force deflection belt (6) with a first end to be fixed to the waist belt and a second end which is to be guided through the joins between the seat cushions (10) and seat backs (7) and to be fixed to the seat wherein on the second end of the force deflection belt a fixing element (2) is fixed which in an orientation relative to the seat cannot go through the joins between seat cushion (10) and seat back (7), **characterised in that** the fixing element (2) is in the form of a plate and that the second end of the force deflection belt (6) is fixed approximately in the centre of the fixing element.

2. Force deflection device according to claim 1
**characterised in that** the fixing element (2) has releasable fixing means, preferably in the form of a Velcro fastener (3), for the purpose of fixing to the seat on the rear side of the seat back (7).

3. Force deflection device according to one of the claims 1 or 2
**characterised in that** the first end of the force deflection belt (6) has a hook (4) and at least one eye (5) in such a way that the force deflection belt (6) can be placed around the lap belt (9) with the formation of a loop and the eyes can be suspended in hooks.

## Revendications

1. Dispositif de renvoi de force (1) pour l'adaptation d'une ceinture de bassin (9) ou ceinture de sécurité sous-abdominale pour une utilisation par des femmes enceintes ou des personnes ayant un surpoids, comprenant une ceinture à renvoi de force (6) avec une première extrémité à fixer à la ceinture de bassin et une deuxième extrémité à passer à travers l'espace entre le coussin (10) et le dossier (7) du siège ou coussin de siège et à fixer au siège, un élément de fixation (2), ne pouvant pas passer à travers l'espace entre le coussin (10) et le dossier (7) du siège, au moins dans une position par rapport au siège, étant fixé à la deuxième extrémité de la ceinture de renvoi de force (6), **caractérisé en ce que** l'élément de fixation (2) a la forme d'une plaque et **en ce que** la deuxième extrémité de la ceinture de renvoi de force (6) est fixée approximativement au centre de l'élément de fixation.

2. Dispositif de renvoi de force selon la revendication 1, **caractérisé en ce que** l'élément de fixation (2) comporte des moyens de fixation amovibles ayant, de préférence, la forme d'une fermeture à ruban auto-accrochant (3), pour la fixation au siège sur le côté arrière du dossier (7) du siège.

3. Dispositif de renvoi de force selon l'une des revendications 1 ou 2, **caractérisé en ce que** la première extrémité de la ceinture de renvoi de force (6) comporte un crochet (4) ainsi qu'au moins un oeillet (5), de façon à ce que la ceinture de renvoi de force (6), en formant une boucle, puisse être positionnée autour de la ceinture de bassin (9) et que l'oeillet puisse être suspendu au crochet.
